# FASCICULE DE BREVET EUROPEEN

(11) **EP 3 071 483 B1**
(45) Date de publication et mention de la délivrance du brevet: **01.03.2017**
(21) Numéro de dépôt: 14802060.5
(22) Date de dépôt: 21.11.2014
(51) Int. Cl.: B64G 1/10, F16F 1/38, B64G 1/22, B64G 1/64

(54) **STRUCTURE PORTEUSE DE SATELLITE COMPORTANT UN DISPOSITIF DE LIAISON AMORTISSANTE**
SATELLITENTRAGESTRUKTUR MIT EINER DÄMPFUNGSVERBINDUNGSVORRICHTUNG
SATELLITE SUPPORT STRUCTURE COMPRISING A DAMPING CONNECTING DEVICE

(30) Priorité: 22.11.2013 FR 1361504
(43) Date de publication de la demande: 28.09.2016
(73) Titulaire: Airbus Defence and Space SAS, 78130 Les Mureaux (FR)
(72) Inventeur: ARIDON, Gwenaëlle, F-31450 Ayguesvives (FR); CAMARASA, Patrick, F-31320 Rebigue (FR)
(74) Mandataire: Ipside
(86) Numéro de dépôt international: PCT/EP2014/075292
(87) Numéro de publication internationale: WO 2015/075184

(56) Documents cités:
- WO-A2-2009/066045
- FR-A1- 2 895 052
- FR-A1- 2 967 742
- US-A- 3 559 769

## Description

### DOMAINE TECHNIQUE

La présente invention appartient au domaine des satellites artificiels, et concerne plus particulièrement une structure porteuse de satellite, destinée à porter un ou plusieurs équipements dudit satellite.

### ÉTAT DE LA TECHNIQUE

De manière connue, un satellite se présente sous la forme d'une structure porteuse sur laquelle sont fixés divers équipements du satellite.

La structure porteuse du satellite est constituée principalement d'éléments structuraux reliés entre eux, comportant par exemple une armature et un ensemble de panneaux fixés sur ladite armature. Les panneaux peuvent également être assemblés entre eux grâce à des équerres permettant de s'affranchir de l'armature.

Une telle structure porteuse est connue de FR 2 967 742 A1, qui est considéré comme l'art antérieur le plus proche et décrit les caractéristiques du préambule de la revendication 1.

Les équipements du satellite, fixés à la structure porteuse, sont des équipements de plateforme (réservoirs d'ergols, batteries, antennes de télémesure / télécommande, etc.) ou de charge utile (instrument de mesure, antennes de télécommunication, etc.).

Les vibrations présentes au niveau d'une structure porteuse de satellite se propagent jusqu'aux divers équipements dudit satellite, et notamment jusqu'aux instruments de mesure dudit satellite.

Les vibrations présentes au niveau de la structure porteuse peuvent avoir plusieurs origines. Par exemple, au lancement du satellite, la structure porteuse subit des vibrations de forte amplitude. En outre, la séparation des étages du lanceur, et les chocs pyrotechniques pour le dégerbage des appendices peuvent générer des chocs dans la structure porteuse. En orbite, les actionneurs d'une centrale inertielle du satellite (par exemple des roues de réaction, des gyroscopes, etc.) engendrent des vibrations, de faible amplitude en comparaison des vibrations subies notamment au lancement, qui se propagent desdits actionneurs vers les instruments de mesure par l'intermédiaire de la structure porteuse.

Afin d'amortir les vibrations d'une structure porteuse (c'est-à-dire atténuer l'amplitude des vibrations sans modifier significativement les modes de résonance de la structure porteuse), il est connu de fixer des moyens élastomères sur les zones de ladite structure porteuse qui se déforment le plus, du fait que les vibrations excitent un mode de résonance local de la structure porteuse.

Ces moyens élastomères, à raideur souple dans la direction de déformation de la structure porteuse, sont donc placés en parallèle de ladite structure porteuse. Ces moyens élastomères se déforment sous l'effet des déformations de la structure porteuse, et contribuent à amortir les vibrations de la structure porteuse. Pour plus d'efficacité, le mode de déformation privilégié des moyens élastomères est le cisaillement.

Toutefois, les vibrations de la structure porteuse ne sont amorties que sur une zone bien particulière de la structure porteuse (mode de résonance local), de sorte qu'il n'est pas possible d'amortir les vibrations dans une large gamme de fréquences. Ainsi, il n'est notamment pas possible d'amortir les vibrations induites par un choc, celles-ci couvrant en principe une très large gamme de fréquences et se propageant dans toute la structure porteuse.

### EXPOSÉ DE L'INVENTION

La présente invention a pour objectif de remédier à tout ou partie des limitations des solutions de l'art antérieur, notamment celles exposées ci-avant, en proposant une solution qui permette d'atténuer l'amplitude des vibrations d'une structure porteuse de satellite dans une large gamme de fréquences (par exemple entre 80 Hz et 500 Hz).

En outre, la présente invention a également pour objectif de proposer une solution qui permette de tenir les efforts au lancement et/ou qui modifie peu les modes de résonance de la structure porteuse.

En effet, les structures porteuses sont généralement conçues pour présenter des modes de résonance distincts des modes d'excitation des lanceurs. On comprend donc qu'une solution entraînant une modification des modes de résonance de la structure porteuse serait susceptible d'introduire des problèmes de couplage avec les modes d'excitation des lanceurs.

A cet effet, et selon un premier aspect, la présente invention concerne une structure porteuse de satellite destinée à porter au moins un équipement dudit satellite, ladite structure porteuse comportant des éléments structuraux. Au moins un des éléments structuraux est un dispositif de liaison amortissante reliant au moins deux autres éléments structuraux de la structure porteuse, dits « éléments structuraux amortis ». Ledit dispositif de liaison amortissante comporte des moyens élastomères agencés dans ledit dispositif de liaison amortissante de sorte que la transmission d'efforts entre les deux éléments structuraux amortis, par l'intermédiaire dudit dispositif de liaison amortissante, s'effectue entièrement par l'intermédiaire desdits moyens élastomères. En outre, les moyens élastomères sont en matériau élastomère d'angle de perte δ (également connu sous le nom d'angle de phase) supérieur à dix degrés.

Dans toute la présente demande, on entend, par « moyens élastomères », un ou plusieurs éléments réalisés avec un matériau élastomère.

Du fait que les efforts transmis entre les deux éléments structuraux amortis, via le dispositif de liaison amortissante, transitent tous par l'intermédiaire des moyens élastomères (en d'autres termes les moyens élastomères sont agencés en série entre les éléments structuraux amortis, et non en parallèle sur un élément structural comme c'était le cas dans l'art antérieur), lesdits moyens élastomères sont adaptés à atténuer des vibrations de plusieurs modes de résonance, du moment que lesdits modes de résonance font travailler le dispositif de liaison amortissante, permettant ainsi de couvrir une large gamme de fréquences.

Une atténuation efficace de l'amplitude des vibrations est en outre obtenue du fait que les moyens élastomères sont réalisés avec un matériau élastomère d'angle de perte δ supérieur à dix degrés.

Comme son nom l'indique, le dispositif de liaison amortissante est un élément structural à propriétés amortissantes, c'est-à-dire que l'atténuation de l'amplitude des vibrations est obtenue sans modifier significativement les modes de résonance de la structure porteuse. Les moyens élastomères sont donc à cet effet de raideur adaptée à ne pas modifier significativement les modes de résonance de ladite structure porteuse.

Il est d'ailleurs à noter que les propriétés amortissantes sont à distinguer des propriétés isolatrices qui correspondent à un filtrage des vibrations caractérisé par la création d'un mode d'isolation et de sa fréquence de coupure. L'isolation est par conséquent accompagnée d'une modification importante des modes de résonance de la structure porteuse.

Cette distinction entre propriétés amortissantes et propriétés isolatrices est connue de l'homme de l'art, on peut se référer notamment à l'ouvrage scientifique suivant : « Handbook of Viscoelastic Vibration Damping », de l'auteur David I. G. Jones.

On considère une structure de référence, correspondant à la structure porteuse selon l'invention dans laquelle les moyens élastomères ont été remplacés par des moyens rigides (de raideur pouvant être considérée comme infinie, par exemple réalisés en aluminium), de même géométrie que lesdits moyens élastomères. De manière connue, la structure de référence comporte des modes de résonance et notamment un mode principal de résonance correspondant au mode de résonance présentant le gain le plus élevé.

L'introduction des moyens élastomères conformément à l'invention entraîne un décalage fréquentiel des modes de résonance de la structure de référence (ne sont concernés que les modes de résonance générant de l'énergie de déformation dans le dispositif de liaison amortissante). Le décalage fréquentiel est plus particulièrement une diminution desdits modes de résonance, c'est-à-dire un assouplissement.

Dans toute la présente demande, on considère qu'un élément structural, comportant des moyens élastomères, est à propriétés amortissantes dès lors que la diminution en fréquence du mode principal Fp de résonance de la structure de référence (parmi les modes de résonance générant de l'énergie de déformation dans la liaison amortissante), par l'introduction des moyens élastomères à la place des moyens rigides susmentionnés, est inférieure à 20% dudit mode principal Fp de résonance de ladite structure de référence. Par conséquent le mode principal F'p de résonance de la structure porteuse selon l'invention est tel que F'p ≥ 0.8·Fp. Au-delà de 20%, l'élément structural n'est plus considéré comme à propriétés amortissantes, mais à propriétés isolatrices.

De manière tout à fait équivalente, on peut considérer le mode principal F'p de résonance de la structure porteuse selon l'invention.

Dans ce cas, un élément structural, comportant des moyens élastomères, est considéré à propriétés amortissantes dès lors que l'augmentation du mode principal F'p de résonance de ladite structure porteuse (parmi les modes de résonance générant de l'énergie de déformation dans la liaison amortissante), par le remplacement des moyens élastomères par les moyens rigides susmentionnés, est inférieure à 25% du mode principal de résonance de la structure porteuse selon l'invention. Par conséquent, le mode principal Fp de résonance de la structure de référence est tel que Fp ≤ 1.25·F'p (c'est-à-dire Fp ≤ F'p/0.8). Au-delà de 25%, l'élément structural n'est plus considéré comme à propriétés amortissantes, mais à propriétés isolatrices.

Par conséquent, les moyens élastomères du dispositif de liaison amortissante de la structure porteuse selon l'invention sont de raideur telle que le remplacement desdits moyens élastomères par des moyens rigides entraîne un décalage fréquentiel du mode principal de résonance de la structure porteuse selon l'invention inférieur à 25% dudit mode principal de résonance.

Le décalage fréquentiel est par exemple évalué soit par essais soit par analyse avec des moyens de calcul connus de l'homme du métier (éléments finis par exemple), en comparant la réponse fréquentielle de la structure porteuse conforme à l'invention avec la réponse fréquentielle de la structure de référence (avec des moyens rigides à la place des moyens élastomères).

On comprend que la raideur nécessaire pour les moyens élastomères, pour avoir des propriétés amortissantes, dépend de la raideur globale de la structure de référence. De manière générale, il est à noter que, du fait de l'agencement en série des moyens élastomères, des propriétés amortissantes sont obtenues avec des moyens élastomères de raideur plus élevée que pour obtenir des propriétés isolatrices.

Dans des modes particuliers de réalisation, la structure porteuse peut comporter en outre l'une ou plusieurs des caractéristiques suivantes, prises isolément ou selon toutes les combinaisons techniquement possibles.

Dans des modes particuliers de réalisation, les moyens élastomères sont de raideur supérieure à 10⁶ (un million) Newtons par mètre (N/m), voire supérieure à 5.10⁶ N/m.

Du fait qu'ils présentent une raideur élevée, de tels moyens élastomères sont en outre adaptés à tenir les efforts au lancement.

Dans des modes particuliers de réalisation, le dispositif de liaison amortissante comporte au moins une équerre comportant au moins deux ailes destinées à être reliées par des moyens de liaison respectifs aux éléments structuraux amortis, lesdits moyens élastomères étant agencés de sorte que la transmission d'efforts entre une des ailes de l'équerre, dite « aile amortie », et les moyens de liaison de ladite aile amortie s'effectue entièrement par l'intermédiaire desdits moyens élastomères.

Par « équerre », on entend un élément profilé comportant tel qu'indiqué deux ailes formant une section en forme de L, de T ou de V.

Dans des modes particuliers de réalisation, les moyens élastomères comportent deux couches élastomères agencées de part et d'autre de l'aile amortie, et les moyens de liaison de l'aile amortie comportent :
- deux contre-plaques adhérisées contre les couches élastomères,
- au moins un dispositif de fixation de l'aile amortie.

De telles dispositions permettent d'amortir les vibrations, selon le plan de l'aile amortie, par cisaillement des moyens élastomères. Les moyens de liaison (contre-plaques et dispositif de fixation) vont se mouvoir en cisaillement par rapport à l'aile amortie de l'équerre via les couches élastomères.

Dans des modes particuliers de réalisation, les couches élastomères et les contre-plaques recouvrent au moins 50% de la surface de l'aile amortie.

De telles dispositions permettent d'avoir une meilleure raideur en cisaillement. En effet, pour un matériau élastomère donné, la raideur en cisaillement est proportionnelle à la surface des couches élastomères, et inversement proportionnelle à l'épaisseur desdites couches élastomères. Par conséquent, en recouvrant au moyen des couches élastomères au moins 50% de la surface de l'aile amortie (et de préférence 80%, voire 90% ou plus de ladite surface de l'aile amortie), la surface des couches élastomères sera importante. De la sorte, une raideur en cisaillement élevée pourra être obtenue sans avoir à trop réduire l'épaisseur des couches élastomères.

Dans des modes particuliers de réalisation, chaque couche élastomère est d'épaisseur inférieure à 2.5 millimètres (mm), de préférence comprise entre 1.5 mm et 2 mm.

Dans des modes particuliers de réalisation, chaque dispositif de fixation comporte des moyens de butée adaptés à garantir une distance minimale prédéfinie entre les contre-plaques, et des moyens de serrage desdites contre-plaques.

De telles dispositions permettent notamment d'assurer, par un choix adapté de ladite distance minimale prédéfinie, que le serrage des contre-plaques n'entraîne pas une compression trop importante des couches élastomères, ce qui diminuerait l'efficacité de l'amortissement par cisaillement desdites couches élastomères. Grâce aux moyens de butée, il est au contraire possible de maîtriser la contrainte appliquée sur les couches élastomères.

Dans des modes particuliers de réalisation, les moyens de butée et les moyens de serrage comportent un ensemble vis à épaulement / écrou.

Dans des modes particuliers de réalisation, les moyens de butée sont intégrés entre les contre-plaques, de sorte que les deux contre-plaques prennent appui sur lesdits moyens de butée.

Dans des modes particuliers de réalisation, les moyens de butée comportent un goujon. Les moyens de serrage comportent, du côté d'une des contre-plaques, un élément saillant du goujon, ledit élément saillant traversant ladite contre-plaque, et un organe adapté à coopérer avec l'élément saillant pour placer ladite contre-plaque en appui contre le goujon.

Dans des modes particuliers de réalisation, le goujon comporte, du côté d'une des contre-plaques, un trou borgne comportant un taraudage. En outre, les moyens de serrage comportent une tige adaptée à traverser ladite contre-plaque, ladite tige comportant un filetage adapté à coopérer avec le taraudage du trou borgne.

De telles dispositions permettent d'utiliser le même goujon, intégré entre deux contre-plaques d'un dispositif de liaison amortissante, quelle que soit l'épaisseur de l'élément structural amorti auquel l'aile amortie doit être reliée. Seule la longueur de la tige devra tenir compte de cette épaisseur.

Dans des modes particuliers de réalisation, les moyens de butée comportent une ouverture traversante lisse, et les moyens de serrage comportent une pièce adaptée à traverser lesdits moyens de butée.

Dans des modes particuliers de réalisation, les moyens élastomères comportent un conduit entourant ledit dispositif de fixation entre les contre-plaques. Ce conduit communique entre les deux couches élastomères.

Dans des modes particuliers de réalisation, les deux ailes de l'équerre du dispositif de liaison amortissante sont des ailes amorties. En d'autres termes, chaque aile de l'équerre comporte des moyens élastomères agencés de sorte que la transmission d'efforts entre ladite aile et les moyens de liaison de ladite aile s'effectue entièrement par l'intermédiaire desdits moyens élastomères.

Dans des modes particuliers de réalisation, les éléments structuraux comportent une armature et des panneaux fixés sur ladite armature, ladite armature étant constituée de dispositifs de liaison amortissante comportant des moyens élastomères, lesdits moyens élastomères de chaque dispositif de liaison amortissante étant agencés de sorte que la transmission d'efforts entre les deux éléments structuraux amortis de chaque dispositif de liaison amortissante s'effectue entièrement par l'intermédiaire desdits moyens élastomères.

Selon un second aspect, la présente invention concerne une structure porteuse de satellite destinée à porter au moins un équipement dudit satellite, ladite structure porteuse comportant des éléments structuraux. Au moins un des éléments structuraux est un dispositif de liaison structurale reliant au moins deux autres éléments structuraux de la structure porteuse, dits « éléments structuraux atténués ». Ledit dispositif de liaison structurale comporte des moyens élastomères agencés dans ledit dispositif de liaison structurale de sorte que la transmission d'efforts entre les deux éléments structuraux atténués, par l'intermédiaire dudit dispositif de liaison structurale, s'effectue entièrement par l'intermédiaire desdits moyens élastomères. En outre, les moyens élastomères sont en matériau élastomère d'angle de perte δ supérieur à dix degrés et de raideur supérieure à 10⁶ (un million) N/m.

Tel qu'indiqué précédemment pour le dispositif de liaison amortissante de la structure porteuse selon le premier aspect de l'invention, du fait que les moyens élastomères sont agencés en série entre les éléments structuraux atténués, lesdits moyens élastomères sont adaptés à atténuer l'amplitude des vibrations dans une large gamme de fréquences. Une atténuation efficace de l'amplitude des vibrations est en outre obtenue du fait que les moyens élastomères sont réalisés avec un matériau élastomère d'angle de perte δ supérieur à dix degrés. Enfin, du fait de leur raideur élevée, supérieure à 10⁶ N/m, voire supérieure à 5.10⁶ N/m, de tels moyens élastomères sont en outre adaptés à tenir les efforts au lancement.

Tel qu'indiqué précédemment, la raideur nécessaire pour les moyens élastomères, pour avoir des propriétés amortissantes, dépend de la raideur globale de la structure de référence. Par conséquent, le dispositif de liaison structurale de la structure porteuse selon le second aspect de l'invention n'est pas nécessairement à propriétés amortissantes. Toutefois, une raideur des moyens élastomères supérieure à 10⁶ N/m, voire supérieure à 5.10⁶ N/m, permettra d'avoir des propriétés amortissantes pour de nombreuses structures porteuses de satellites.

Dans des modes particuliers de réalisation, la structure porteuse selon le second aspect de l'invention peut comporter en outre l'une ou plusieurs des caractéristiques additionnelles décrites ci-avant pour la structure porteuse selon le premier aspect de l'invention, prises isolément ou selon toutes les combinaisons techniquement possibles.

Notamment, dans des modes particuliers de réalisation, le dispositif de liaison structurale comporte au moins une équerre comportant au moins deux ailes destinées à être reliées par des moyens de liaison respectifs aux éléments structuraux atténués, lesdits moyens élastomères étant agencés de sorte que la transmission d'efforts entre une des ailes de l'équerre, dite « aile atténuée », et les moyens de liaison de ladite aile atténuée s'effectue entièrement par l'intermédiaire desdits moyens élastomères.

Selon un troisième aspect, la présente invention concerne une structure porteuse de satellite destinée à porter au moins un équipement dudit satellite, ladite structure porteuse comportant des éléments structuraux. Au moins un des éléments structuraux est un dispositif de liaison structurale reliant au moins deux autres éléments structuraux de la structure porteuse, dits « éléments structuraux atténués ». Ledit dispositif de liaison structurale comporte des moyens élastomères agencés dans ledit dispositif de liaison structurale de sorte que la transmission d'efforts entre les deux éléments structuraux atténués, par l'intermédiaire dudit dispositif de liaison structurale, s'effectue entièrement par l'intermédiaire desdits moyens élastomères. Plus particulièrement, le dispositif de liaison structurale comporte au moins une équerre comportant au moins deux ailes destinées à être reliées par des moyens de liaison respectifs aux éléments structuraux atténués, lesdits moyens élastomères étant agencés de sorte que la transmission d'efforts entre une des ailes de l'équerre, dite « aile atténuée », et les moyens de liaison de ladite aile atténuée s'effectue entièrement par l'intermédiaire desdits moyens élastomères.

Dans des modes particuliers de réalisation, la structure porteuse selon le troisième aspect de l'invention peut comporter en outre l'une ou plusieurs des caractéristiques additionnelles décrites ci-avant pour la structure porteuse selon le premier aspect de l'invention, prises isolément ou selon toutes les combinaisons techniquement possibles. En d'autres termes, tous les modes de réalisation de la structure porteuse selon le premier aspect de l'invention, dans lesquels le dispositif de liaison amortissante se présente sous la forme générale d'une équerre, peuvent être généralisés à un dispositif de liaison structurale qui n'est pas nécessairement à propriétés amortissantes et dont les moyens élastomères ne sont pas nécessairement réalisés avec un matériau élastomère d'angle de perte δ supérieur à dix degrés.

Selon un quatrième aspect, la présente invention concerne un satellite comportant une structure porteuse selon l'un quelconque des modes de réalisation de l'invention, et au moins un équipement fixé à ladite structure porteuse.

### PRÉSENTATION DES FIGURES

L'invention sera mieux comprise à la lecture de la description suivante, donnée à titre d'exemple nullement limitatif, et faite en se référant aux figures qui représentent :
- Figures 1 et 2 : des représentations schématiques de structures porteuses d'un satellite,
- Figures 3 et 4 : des vues de face et en perspective d'un exemple de réalisation d'un dispositif de liaison amortissante selon l'invention,
- Figures 5 à 8 : des vues en coupe d'exemples de réalisation d'un dispositif de fixation de dispositif de liaison amortissante.

Dans ces figures, des références identiques d'une figure à une autre désignent des éléments identiques ou analogues. Pour des raisons de clarté, les éléments représentés ne sont pas à l'échelle, sauf mention contraire.

### DESCRIPTION DÉTAILLÉE DE MODES DE RÉALISATION

La présente invention concerne une structure porteuse de satellite destinée à porter au moins un équipement dudit satellite. La structure porteuse du satellite est constituée principalement d'éléments structuraux reliés entre eux, comportant par exemple une armature et un ensemble de panneaux fixés sur ladite armature.

Dans son principe, la présente invention repose sur l'intégration, dans la structure porteuse, d'au moins un dispositif de liaison structurale reliant au moins deux autres éléments structuraux de la structure porteuse. Ledit dispositif de liaison structurale comporte des moyens élastomères agencés dans ledit dispositif de liaison structurale de sorte que la transmission d'efforts entre les deux éléments structuraux reliés, par l'intermédiaire dudit dispositif de liaison structurale, s'effectue entièrement par l'intermédiaire des moyens élastomères (en d'autres termes les moyens élastomères sont agencés en série entre les éléments structuraux reliés).

Du fait de leur agencement en série, de tels moyens élastomères permettent d'atténuer les vibrations dans une large gamme de fréquences (par exemple entre 80 Hz et 500 Hz) à la fois pour des excitations de type sinus, aléatoire ou choc.

Dans la suite de la description, on se place de manière non limitative dans le cas où le dispositif de liaison structurale est à propriétés amortissantes, et est désigné ci-après par « dispositif de liaison amortissante ». Les éléments structuraux reliés par ledit dispositif de liaison amortissante sont en outre désignés ci-après par « éléments structuraux amortis ».

Pour amortir sans isoler, lesdits moyens élastomères sont de raideur telle que les modes de résonance de la structure porteuse ne sont pas trop modifiés par rapport à une structure de référence correspondant à ladite structure porteuse dans laquelle tous les moyens élastomères ont été remplacés par des moyens rigides (de raideur pouvant être considérée comme infinie, par exemple réalisés en aluminium) de même géométrie. La raideur desdits moyens élastomères est de préférence supérieure à 10⁶ N/m, voire supérieure à 5.10⁶ N/m, afin de tenir les efforts au lancement, si toutefois une telle raideur est compatible avec l'obtention de propriétés amortissantes.

Dans la suite de la description, on se place de manière non limitative dans le cas où le dispositif de liaison amortissante se présente sous la forme d'une cornière 30, dite « cornière amortissante ». La cornière 30 amortissante comporte une équerre 40 comportant deux ailes 41, 42 reliées par des moyens de liaison respectifs aux éléments structuraux amortis de la structure porteuse.

Tel qu'indiqué précédemment, on entend par « équerre » tout élément profilé comportant deux ailes formant une section en forme de L, de T ou de V (l'angle entre les ailes pouvant être obtus ou aigu).

Dans ce cas, les moyens élastomères sont de préférence agencés en série entre une des ailes 41, 42 de l'équerre 40 et les moyens de liaison de ladite aile. Une telle aile est désignée ci-après par « aile amortie ».

La cornière 30 amortissante peut comporter une seule aile amortie, ou bien deux ailes amorties. Dans la suite de la description, on se place de manière non limitative dans le cas où les deux ailes 41, 42 de l'équerre 40 de la cornière 30 amortissante sont des ailes amorties, de sorte que les deux ailes 41, 42 comportent des moyens élastomères agencés en série entre lesdites ailes et les moyens de liaison respectifs desdites ailes.

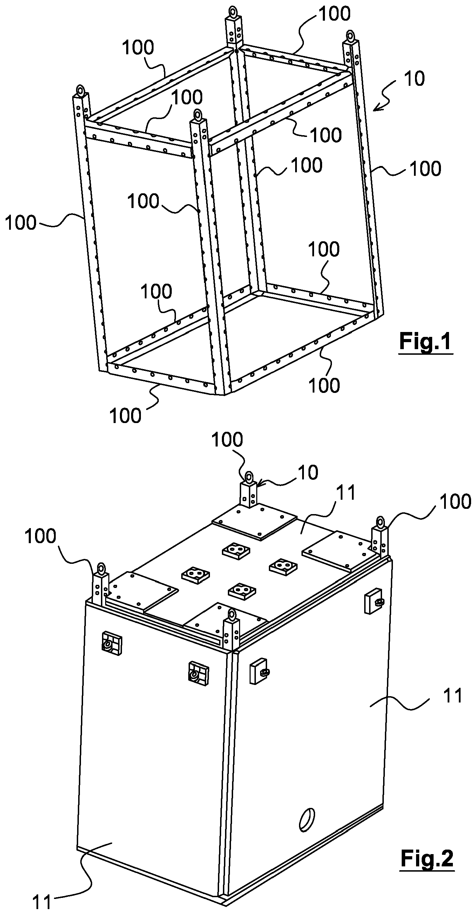

La figure 1 représente, de façon très schématique, des éléments structuraux d'une structure porteuse de satellite correspondant à une armature 10 en forme de polyèdre (parallélépipède rectangle dans l'exemple de la figure 1). L'armature 10 est destinée à porter notamment d'autres éléments structuraux, par exemple des panneaux 11 formant des murs extérieurs du satellite (visibles sur la figure 2). L'armature 10 du satellite est constituée de pièces 100 formant les arêtes dudit polyèdre, assemblées entre elles.

Chacune des pièces 100 formant les arêtes de l'armature 10 peut être une cornière 30 amortissante. De préférence, afin de maximiser l'amortissement, toutes les pièces 100 sont des cornières 30 amortissantes.

Rien n'exclut cependant, suivant d'autres exemples, que seules certaines desdites pièces soient des cornières 30 amortissantes, les autres pièces assemblant d'autres panneaux étant par exemple des cornières non amortissantes.

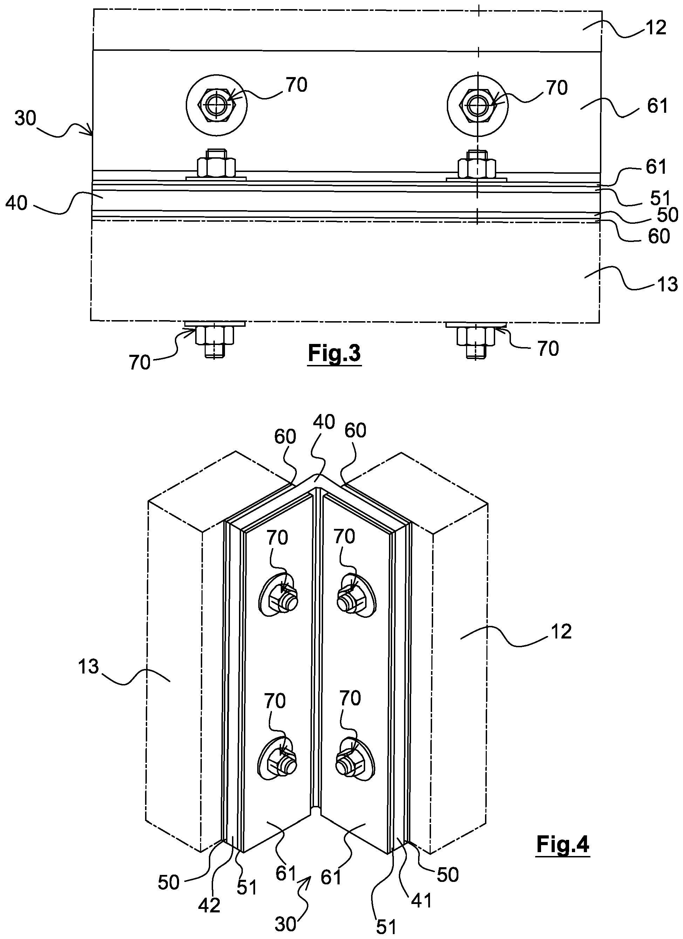

Les figures 3 et 4 représentent des vues de face et en perspective d'un exemple de réalisation d'une cornière 30 amortissante, dans laquelle les deux ailes 41, 42 de l'équerre 40 sont des ailes amorties. Une première aile 41 de l'équerre 40 est reliée à un premier élément structural 12 amorti. L'autre aile 42 de l'équerre 40 est reliée à un autre élément structural 13 amorti.

Dans l'exemple illustré par les figures 3 et 4, les moyens élastomères comportent, pour chaque aile 41, 42, deux couches élastomères 50, 51 agencées de part et d'autre de l'aile 41, 42 considérée. En outre, les moyens de liaison comportent, pour chaque aile 41, 42 :
- deux contre-plaques 60, 61 agencées contre les couches élastomères 50, 51,
- deux dispositifs de fixation 70 desdites ailes amorties.

Les couches élastomères 50, 51 sont adhérisées contre leurs contre-plaques 60, 61 respectives et contre l'aile 41, 42 considérée. Une telle adhérisation améliore la tenue aux efforts, du fait que la transmission desdits efforts, des moyens de liaison (en particulier des contre-plaques) vers les couches élastomères (et donc vers l'aile amortie), est plus efficace. L'adhérisation est par exemple obtenue grâce à des propriétés adhésives intrinsèques du matériau élastomère lors du moulage à chaud de celui-ci, ou encore au moyen d'une colle aux interfaces entre les couches élastomères et d'une part les contre-plaques et, d'autre part, l'aile amortie.

La transmission des efforts des moyens de liaison vers chaque aile 41, 42 va solliciter les moyens élastomères principalement en cisaillement, puis transiter par l'équerre 40 rigide pour atteindre l'aile opposée.

Les couches élastomères 50, 51 d'une aile 41, 42 travaillent en cisaillement dans un plan défini par l'aile 41, 42 considérée. Les deux ailes 41, 42 étant des ailes amorties, la cornière 30 amortissante illustrée par les figures 3 et 4 permet un amortissement des efforts par cisaillement de moyens élastomères suivant deux plans non parallèles, c'est-à-dire suivant trois axes.

Dans un mode particulier de réalisation, les couches élastomères 50, 51 et les contre-plaques 60, 61 d'au moins une des ailes 41, 42 recouvrent au moins 50% de la surface de l'aile 41, 42 considérée. En effet, plus la surface de cisaillement des couches élastomères 50, 51 est élevée, et plus leur raideur en cisaillement est élevée, à épaisseur constante desdites couches élastomères 50, 51. Ainsi, il est possible d'obtenir une raideur en cisaillement élevée sans avoir à trop diminuer l'épaisseur des couches élastomères 50, 51.

Alternativement ou en complément, chaque couche élastomère 50, 51 est d'épaisseur inférieure à 2.5 millimètres (mm), de préférence comprise entre 1.5 mm et 2 mm, ce qui permet d'assurer que la raideur en cisaillement sera suffisamment élevée dans la majorité des cas.

C'est le cas dans l'exemple illustré par les figures 3 et 4, dans lequel les couches élastomères 50, 51 et les contre-plaques 60, 61 des deux ailes 41, 42 recouvrent pratiquement toute la surface de leurs ailes 41, 42 respectives, à l'exception :
- de zones au voisinage de la jonction entre les ailes 41, 42,
- d'ouvertures traversantes ménagées dans les contre-plaques 60, 61, les couches élastomères 50, 51 et l'aile 41, 42 considérée (des ouvertures traversantes correspondantes étant également prévues sur l'élément structural 12, 13 amorti auquel l'aile 41, 42 considérée est reliée), afin de permettre le passage des dispositifs de fixation 70.

Dans un exemple non limitatif de réalisation, les contre-plaques 60, 61 et l'équerre 40 sont en aluminium. Le matériau élastomère utilisé pour la fabrication des couches élastomères 50, 51 est par exemple à base de bromo-butyl. De manière plus générale, tout matériau élastomère compatible avec une application spatiale peut être utilisé, par exemple un matériau élastomère à base de silicone, de caoutchouc naturel, etc. Le matériau élastomère utilisé pour la fabrication des couches élastomères 50, 51 présente de préférence un angle de perte δ (également connu sous le nom d'angle de phase) supérieur à dix degrés, assurant ainsi une atténuation efficace de l'amplitude des vibrations. Les dispositifs de fixation 70 sont par exemple en acier.

Les dispositifs de fixation 70 peuvent prendre toute forme adaptée à fixer les ailes amorties contre les éléments structuraux 12, 13 amortis. Lesdits dispositifs de fixation 70 peuvent en outre prendre une forme différente d'une aile 41, 42 à une autre de l'équerre 40, voire d'un dispositif de fixation à un autre d'une même aile 41, 42 de ladite équerre 40.

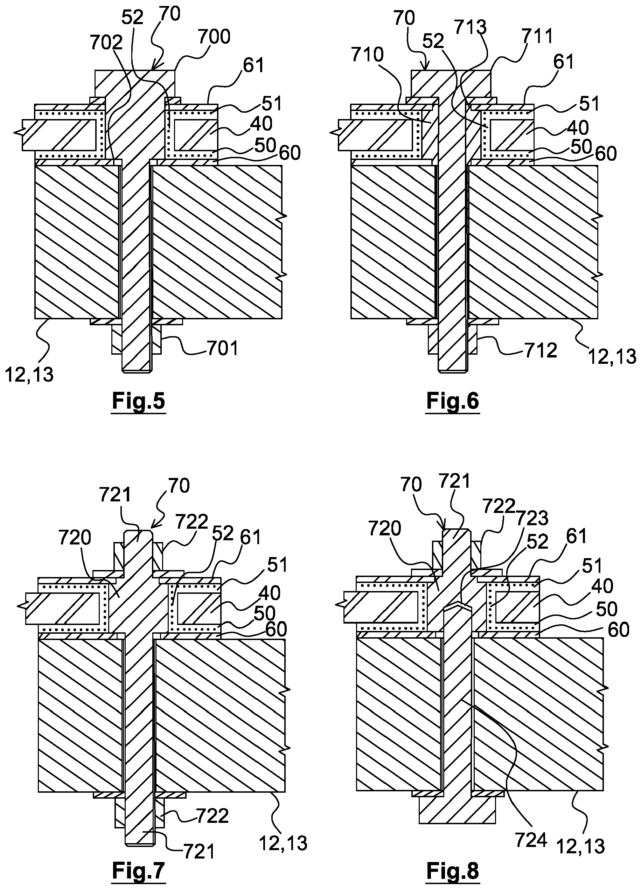

Les figures 5, 6, 7 et 8 représentent des vues en coupe de différents exemples de réalisation desdits dispositifs de fixation 70.

Dans tous les exemples illustrés par les figures 5 à 8, les contre-plaques 60, 61, les couches élastomères 50, 51 et l'équerre 40 comportent une ouverture traversante pour le passage de chaque dispositif de fixation 70.

Tel qu'illustré par les figures 5 à 8, les couches élastomères 50, 51 se rejoignent au niveau de l'ouverture traversante. En d'autres termes, les moyens élastomères forment un conduit 52 à l'intérieur de l'ouverture traversante, à travers lequel le dispositif de fixation 70 traverse l'équerre 40. De la sorte, au niveau du conduit 52, les moyens élastomères sont sollicités en compression entre l'équerre 40 et le dispositif de fixation 70, ceci augmente leur raideur et donc leur tenue aux efforts.

En outre, dans tous les exemples illustrés par les figures 5 à 8, le dispositif de fixation 70 comporte des moyens de butée adaptés à garantir une distance minimale prédéfinie entre les contre-plaques 60, 61, et des moyens de serrage desdites contre-plaques 60, 61. La distance minimale prédéfinie imposée par les moyens de butée est avantageusement choisie de sorte à éviter d'appliquer une contrainte trop importante sur les couches élastomères 50, 51 lors du serrage des contre-plaques 60, 61.

Rien n'exclut, suivant d'autres exemples non illustrés par des figures, d'avoir des dispositifs de fixation 70 dépourvus de moyens de butée.

Dans le mode particulier de réalisation illustré par la figure 5, les moyens de butée et les moyens de serrage du dispositif de fixation 70 comportent un ensemble vis 700 à épaulement / écrou 701.

La longueur de l'épaulement de la vis 700 détermine la distance minimale entre les contre-plaques 60, 61. Dans l'exemple illustré par la figure 5, l'épaulement 702 de la vis 700 prend appui sur la contre-plaque 60. Rien n'exclut, suivant d'autres exemples non illustrés par des figures, d'avoir un épaulement prenant appui directement sur l'élément structural 12, 13 amorti.

Les figures 6 à 8 représentent des exemples de réalisation dans lesquels les moyens de butée sont intégrés entre les contre-plaques 60, 61, de sorte que les deux contre-plaques 60, 61 prennent appui sur lesdits moyens de butée. En outre, lorsque les couches élastomères 50, 51 sont adhérisées contre leurs contre-plaques 60, 61 respectives et contre l'équerre 40, lesdits moyens de butée sont enfermés à l'intérieur de la cornière 30 amortissante.

Dans le mode particulier de réalisation illustré par la figure 6, les moyens de butée comportent une entretoise 710 intégrée, entre les contre-plaques 60, 61, à l'intérieur du conduit 52 des moyens élastomères. Les moyens de serrage se présentent par exemple sous la forme d'un ensemble vis 711 et écrou 712, ladite vis traversant :
- les contre-plaques 60, 61,
- les couches élastomères 50, 51 et l'équerre 40, par l'intermédiaire d'une ouverture traversante lisse de l'entretoise 710,
- l'élément structural 12, 13 amorti.

L'entretoise 710 peut être entièrement intégrée entre les contre-plaques 60, 61 ou, tel qu'illustré par la figure 6, comporter des épaulements avec des parties 713 traversant lesdites contre-plaques 60, 61. Les moyens de serrage peuvent prendre d'autres formes, par exemple une tige adaptée à coopérer avec deux écrous, etc.

La figure 7 représente un mode préféré de réalisation, dans lequel les moyens de butée comportent un goujon 720 intégré, entre les contre-plaques 60, 61, à l'intérieur du conduit 52 des moyens élastomères. Contrairement à l'entretoise 710 représentée sur la figure 6, le goujon 720 est un corps plein. En outre, le goujon 720 comporte, du côté de chaque contre-plaque 60, 61, un élément saillant 721 traversant ladite contre-plaque. L'élément saillant 721 du côté de l'élément structural 12, 13 amorti relié à l'équerre 40 traverse en outre ledit élément structural amorti 12, 13. Les moyens de serrage comportent lesdits éléments saillants 721 et des organes 722 adaptés à coopérer avec lesdits éléments saillants pour placer les contre-plaques 60, 61 en appui contre le goujon 720. Les éléments saillants 721 se présentent par exemple sous la forme de tiges filetées, et les organes 722 se présentent par exemple sous la forme d'écrous.

Par rapport au mode de réalisation illustré par la figure 6, l'utilisation du goujon 720 et des organes 722 permet de réduire les frottements entre le dispositif de fixation 70 et les contre-plaques 60, 61, de sorte que la transmission d'efforts est améliorée.

La figure 8 représente une variante du mode réalisation illustré par la figure 7. Le goujon 720 illustré sur la figure 8 diffère de celui illustré par la figure 7 en ce qu'il ne comporte un élément saillant 721 que d'un côté, en l'occurrence du côté opposé à l'élément structural 12, 13 amorti relié à l'équerre 40. Du côté dudit élément structural 12, 13 amorti, le goujon 720 comporte un trou 723 borgne comportant un taraudage interne.

Les moyens de serrage comportent alors, du côté de l'élément saillant 721, le même type d'organe 722 que dans le mode de réalisation illustré par la figure 7. Du côté de l'élément structural 12, 13 amorti, les moyens de serrage comportent une tige 724 comportant un filetage adapté à coopérer avec le taraudage du trou 723 borgne du goujon 720. Dans l'exemple non limitatif illustré par la figure 8, la tige 724 est la tige d'une vis. La longueur de la tige 724 est choisie en fonction de l'épaisseur de l'élément structural 12, 13 amorti à traverser, de l'épaisseur de la contre-plaque 60 en appui sur ledit élément structural amorti et de la profondeur du trou 723 borgne. La longueur de la tige 724 est choisie de sorte à assurer que ladite tige 724 traverse l'élément structural 12, 13 amorti et ladite contre-plaque 60, et s'engage avec le trou 723 borgne sans arriver en butée au fond dudit trou borgne.

Par rapport au mode de réalisation illustré par la figure 7, l'utilisation d'un goujon 720 présentant un trou 723 borgne du côté de l'élément structural 12, 13 amorti à relier à l'équerre 40 présente l'avantage que la cornière 30 amortissante ainsi obtenue est utilisable quelle que soit l'épaisseur de l'élément structural 12, 13 amorti considéré.

De manière plus générale, il est à noter que les modes de réalisation considérés ci-dessus ont été décrits à titre d'exemples non limitatifs, et que d'autres variantes sont par conséquent envisageables.

Notamment, l'invention a été décrite en considérant une cornière 30 amortissante comportant deux ailes amorties. Rien n'exclut, suivant d'autres exemples, d'avoir une cornière 30 amortissante comportant une seule aile amortie. Tel qu'indiqué précédemment, une telle cornière 30 amortissante ne travaille en cisaillement que dans un plan. Dans un tel cas, pour des raisons d'aménagement, il peut être avantageux de prévoir au moins deux telles cornières 30 amortissantes agencées de sorte leurs moyens élastomères travaillent en cisaillement dans des plans respectifs non parallèles, afin d'amortir les efforts suivant trois axes.

En outre, l'invention a été décrite en considérant deux dispositifs de fixation 70 par aile amortie. Rien n'exclut, suivant d'autres exemples, de considérer un nombre différent de dispositifs de fixation 70 par aile amortie, par exemple un seul dispositif de fixation 70 par aile amortie, ou trois ou plus dispositifs de fixation 70 par aile amortie.

## Revendications

1. - Structure porteuse de satellite destinée à porter au moins un équipement dudit satellite, ladite structure porteuse comportant des éléments structuraux (10, 11, 12, 13) et au moins un des éléments structuraux est un dispositif de liaison amortissante (30) reliant au moins deux autres éléments structuraux de la structure porteuse, dits « éléments structuraux amortis », ledit dispositif de liaison amortissante comportant des moyens élastomères, ladite structure porteuse étant **caractérisée en ce que** ledit dispositif de liaison amortissante comporte en outre au moins une équerre (40) comportant au moins deux ailes (41, 42) destinées à être reliées par des moyens de liaison respectifs aux éléments structuraux amortis, lesdits moyens élastomères étant en matériau élastomère d'angle de perte δ supérieur à dix degrés et étant agencés de sorte que la transmission d'efforts entre une des ailes de l'équerre, dite « aile amortie », et les moyens de liaison de ladite aile amortie s'effectue entièrement par l'intermédiaire desdits moyens élastomères.

2. - Structure porteuse selon la revendication 1, **caractérisée en ce que** les moyens élastomères comportent deux couches élastomères (50, 51) agencées de part et d'autre de l'aile (41, 42) amortie, et **en ce que** les moyens de liaison de l'aile amortie comportent :
- deux contre-plaques (60, 61) adhérisées contre les couches élastomères (50, 51),
- au moins un dispositif de fixation (70) de ladite aile amortie.

3. - Structure porteuse selon la revendication 2, **caractérisée en ce que** les couches élastomères (50, 51) et les contre-plaques (60, 61) recouvrent au moins 50% de la surface de l'aile (41, 42) amortie.

4. - Structure porteuse selon l'une des revendications 2 à 3, **caractérisée en ce que** chaque couche élastomère (50, 51) est d'épaisseur inférieure à 2.5 millimètres (mm), de préférence comprise entre 1.5 mm et 2 mm.

5. - Structure porteuse selon l'une des revendications 2 à 4, **caractérisée en ce que** chaque dispositif de fixation (70) comporte des moyens de butée adaptés à garantir une distance minimale prédéfinie entre les contre-plaques (60, 61), et des moyens de serrage desdites contre-plaques.

6. - Structure porteuse selon la revendication 5, **caractérisée en ce que** les moyens de butée et les moyens de serrage comportent un ensemble vis (700) à épaulement / écrou (701).

7. - Structure porteuse selon la revendication 5, **caractérisée en ce que** les moyens de butée sont intégrés entre les contre-plaques (60, 61), de sorte que les deux contre-plaques prennent appui sur lesdits moyens de butée.

8. - Structure porteuse selon la revendication 7, **caractérisée en ce que** les moyens de butée comportent un goujon (720), et **en ce que** les moyens de serrage comportent, du côté d'une des contre-plaques, un élément saillant (721) du goujon (720), ledit élément saillant traversant ladite contre-plaque, et un organe (722) adapté à coopérer avec ledit élément saillant pour placer ladite contre-plaque en appui contre le goujon (720).

9. - Structure porteuse selon la revendication 7, **caractérisée en ce que** les moyens de butée comportent un goujon (720) comportant, du côté d'une des contre-plaques, un trou (723) borgne comportant un taraudage, et **en ce que** les moyens de serrage comportent une tige (724) adaptée à traverser ladite contre-plaque, ladite tige comportant un filetage adapté à coopérer avec le taraudage du trou (723) borgne.

10. - Structure porteuse selon la revendication 7, **caractérisée en ce que** les moyens de butée comportent une ouverture traversante lisse, et **en ce que** les moyens de serrage comportent une pièce (711) adaptée à traverser lesdits moyens de butée.

11. - Structure porteuse selon l'une des revendications 2 à 10, **caractérisée en ce que** les moyens élastomères comportent un conduit (52) entourant ledit dispositif de fixation entre les contre-plaques (60, 61).

12. - Structure porteuse selon l'une des revendications précédentes, **caractérisée en ce que** les deux ailes (41, 42) de l'équerre (40) du dispositif de liaison amortissante (30) sont des ailes amorties et comportent des moyens élastomères respectifs.

13. - Structure porteuse selon l'une des revendications précédentes, **caractérisée en ce que** les éléments structuraux comportent une armature (10) et des panneaux (11) fixés sur ladite armature, ladite armature étant constituée de dispositifs de liaison amortissante (30) comportant des moyens élastomères respectifs, lesdits moyens élastomères de chaque dispositif de liaison amortissante étant agencés de sorte que la transmission d'efforts entre les deux éléments structuraux amortis de chaque dispositif de liaison amortissante s'effectue entièrement par l'intermédiaire desdits moyens élastomères.

14. - Structure porteuse selon l'une des revendications précédentes, **caractérisée en ce que** les moyens élastomères du dispositif de liaison amortissante sont de raideur supérieure à 10⁶ Newtons par mètre.

15. - Satellite comportant une structure porteuse selon l'une des revendications précédentes et au moins un équipement fixé à ladite structure porteuse.

## Patentansprüche

1. Tragestruktur eines Satelliten, die dazu bestimmt ist, wenigstens ein Ausrüstungsteil des Satelliten zu tragen, wobei die Tragestruktur Strukturelemente (10, 11, 12, 13) umfasst und wenigstens eines der Strukturelemente eine Dämpfungsverbindungsvorrichtung (30) ist, die wenigstens zwei andere Strukturelemente der Tragestruktur, "gedämpfte Strukturelemente" genannt, verbindet, wobei die Dämpfungsverbindungsvorrichtung Elastomermittel umfasst, wobei die Tragestruktur **dadurch gekennzeichnet ist, dass** die Dämpfungsverbindungsvorrichtung außerdem wenigstens ein Winkelstück (40) mit wenigstens zwei Schenkeln (41, 42) umfasst, die dazu bestimmt sind, durch jeweilige Verbindungsmittel mit den gedämpften Strukturelementen verbunden zu werden, wobei die Elastomermittel aus Elastomermaterial mit einem Verlustwinkel δ bestehen, der größer als zehn Grad ist, und derart angeordnet sind, dass die Übertragung von Kräften zwischen einem der Schenkel des Winkelstücks, "gedämpfter Schenkel" genannt, und den Verbindungsmitteln dieses gedämpften Schenkels vollständig über die Elastomermittel erfolgt.

2. Tragestruktur nach Anspruch 1, **dadurch gekennzeichnet, dass** die Elastomermittel zwei Elastomerschichten (50, 51) aufweisen, die beiderseits des gedämpften Schenkels (41, 42) angeordnet sind, und dadurch, dass die Verbindungsmittel des gedämpften Schenkels aufweisen:
- zwei Gegenplatten (60, 61), die an die Elastomerschichten (50, 51) angehaftet sind,
- wenigstens eine Vorrichtung zur Befestigung (70) des gedämpften Schenkels.

3. Tragestruktur nach Anspruch 2, **dadurch gekennzeichnet, dass** die Elastomerschichten (50, 51) und die Gegenplatten (60, 61) wenigstens 50 % der Oberfläche des gedämpften Schenkels (41, 42) bedecken.

4. Tragestruktur nach einem der Ansprüche 2 bis 3, **dadurch gekennzeichnet, dass** jede Elastomerschicht (50, 51) eine Dicke hat, die kleiner als 2,5 Millimeter (mm) ist und vorzugsweise zwischen 1,5 mm und 2 mm liegt.

5. Tragestruktur nach einem der Ansprüche 2 bis 4, **dadurch gekennzeichnet, dass** jede Befestigungsvorrichtung (70) Anschlagmittel, die dafür eingerichtet sind, einen vordefinierten Mindestabstand zwischen den Gegenplatten (60, 61) zu garantieren, und Mittel zum Festspannen dieser Gegenplatten aufweist.

6. Tragestruktur nach Anspruch 5, **dadurch gekennzeichnet, dass** die Anschlagmittel und die Spannmittel eine Anordnung "Bundschraube (700) / Mutter (701)" umfassen.

7. Tragestruktur nach Anspruch 5, **dadurch gekennzeichnet, dass** die Anschlagmittel zwischen den Gegenplatten (60, 61) eingebaut sind, so dass sich die zwei Gegenplatten auf die Anschlagmittel stützen.

8. Tragestruktur nach Anspruch 7, **dadurch gekennzeichnet, dass** die Anschlagmittel einen Bolzen (720) umfassen, und dadurch, dass die Spannmittel auf der Seite einer der Gegenplatten ein vorstehendes Element (721) des Bolzens (720), wobei das vorstehende Element die Gegenplatte durchquert, und ein Bauteil (722), das dafür eingerichtet ist, mit dem vorstehenden Element zusammenzuwirken, um die Gegenplatte an dem Bolzen (720) zur Anlage zu bringen, umfassen.

9. Tragestruktur nach Anspruch 7, **dadurch gekennzeichnet, dass** die Anschlagmittel einen Bolzen (720) umfassen, der auf der Seite einer der Gegenplatten ein mit einem Innengewinde versehenes Sackloch (723) aufweist, und dadurch, dass die Spannmittel eine Stange (724) umfassen, die dafür eingerichtet ist, die Gegenplatte zu durchqueren, wobei die Stange ein Gewinde aufweist, das dafür eingerichtet ist, mit dem Innengewinde des Sacklochs (723) zusammenzuwirken.

10. Tragestruktur nach Anspruch 7, **dadurch gekennzeichnet, dass** die Anschlagmittel eine glatte Durchgangsöffnung umfassen, und dadurch, dass die Spannmittel ein Teil (711) umfassen, das dafür eingerichtet ist, die Anschlagmittel zu durchqueren.

11. Tragestruktur nach einem der Ansprüche 2 bis 10, **dadurch gekennzeichnet, dass** die Elastomermittel ein Rohr (52) umfassen, das die Befestigungsvorrichtung zwischen den Gegenplatten (60, 61) umgibt.

12. Tragestruktur nach einem der vorhergehenden Ansprüche, **dadurch gekennzeichnet, dass** die zwei Schenkel (41, 42) des Winkelstücks (40) der Dämpfungsverbindungsvorrichtung (30) gedämpfte Schenkel sind und jeweilige Elastomermittel umfassen.

13. Tragestruktur nach einem der vorhergehenden Ansprüche, **dadurch gekennzeichnet, dass** die Strukturelemente ein Traggerüst (10) und an dem Traggerüst befestigte Platten (11) umfassen, wobei das Traggerüst aus Dämpfungsverbindungsvorrichtungen (30) besteht, die jeweilige Elastomermittel umfassen, wobei die Elastomermittel jeder Dämpfungsverbindungsvorrichtung derart angeordnet sind, dass die Übertragung von Kräften zwischen den zwei gedämpften Strukturelementen jeder Dämpfungsverbindungsvorrichtung vollständig über die Elastomermittel erfolgt.

14. Tragestruktur nach einem der vorhergehenden Ansprüche, **dadurch gekennzeichnet, dass** die Elastomermittel der Dämpfungsverbindungsvorrichtung eine Steifigkeit aufweisen, die größer als 10⁶ Newton pro Meter ist.

15. Satellit, der eine Tragestruktur nach einem der vorhergehenden Ansprüche, und wenigstens ein an dieser Tragestruktur befestigtes Ausrüstungsteil umfasst.

## Claims

1. - A satellite support structure intended to support at least one device of said satellite, said support structure including structural elements (10, 11, 12, 13) and at least one of the structural elements is a damping connecting device (30) connecting at least two other structural elements of the support structure, called "damped structural elements", said damping connecting device including elastomer means, said support structure being **characterized in that** said damping connecting device includes also at least one flat angle bracket (40) including at least one two wings (41, 42) intended to be connected by respective connecting means to the damped structural elements, said elastomer means being made from an elastomer material with a loss angle δ greater than ten degrees and being arranged so that the transmission of forces between one of the wings of the flat angle bracket, called the "damped wing", and the connecting means of said damped wing is achieved entirely via said elastomer means.

2. - The support structure as claimed in claim 1, **characterized in that** the elastomer means include two elastomer layers (50, 51) arranged on respective opposite sides of the damped wing (41, 42), and **in that** the connecting means of the damped wing include:
- two counter-plates (60, 61) stuck against the elastomer layers (50, 51),
- at least one fixing device (70) of said damped wing.

3. - The support structure as claimed in claim 2, **characterized in that** the elastomer layers (50, 51) and the counter-plates (60, 61) cover at least 50% of the area of the damped wing (41, 42).

4. - The support structure as claimed in either one of claims 2 or 3, **characterized in that** each elastomer layer (50, 51) is less than 2.5 millimeters (mm) thick, preferably between 1.5 mm and 2 mm thick inclusive.

5. - The support structure as claimed in any one of claims 2 to 4, **characterized in that** each fixing device (70) includes abutment means adapted to guarantee a predefined minimum distance between the counter-plates (60, 61) and clamping means of said counter-plates.

6. - The support structure as claimed in claim 5, **characterized in that** the abutment means and the clamping means include a screw assembly (700) with a shoulder/nut (701).

7. - The support structure as claimed in claim 5, **characterized in that** the abutment means are integrated between the counter-plates (60, 61) so that the two counter-plates bear on said abutment means.

8. - The support structure as claimed in claim 7, **characterized in that** the abutment means include a pin (720) and **in that** the clamping means include, on the side of one of the counter-plates, an element (721) projecting from the pin (720), said projecting element passing through said counter-plate, and a member (722) adapted to cooperate with said projecting element to place said counter-plate in bearing engagement against the pin (720).

9. - The support structure as claimed in claim 7, **characterized in that** the abutment means include a pin (720) including, on the side of one of the counter-plates, a blind hole (723) including an internal screwthread, and **in that** the clamping means include a rod (724) adapted to pass through said counter-plate, said rod including an external screwthread adapted to cooperate with the internal screwthread of the blind hole (723).

10. - The support structure as claimed in claim 7, **characterized in that** the abutment means include a smooth opening passing through them, and **in that** the clamping means include a part (711) adapted to pass through said abutment means.

11. - The support structure as claimed in any one of claims 2 to 10, **characterized in that** the elastomer means include a conduit (52) around said fixing device between the counter-plates (60, 61).

12. - The support structure as claimed in any one of the preceding claims, **characterized in that** both wings (41, 42) of the flat angle bracket (40) of the damping connecting device (30) are damped wings and include respective elastomer means.

13. - The support structure as claimed in any one of the preceding claims, **characterized in that** the structural elements include a frame (10) and panels (11) fixed to said frame, said frame consisting of damping connecting devices (30) including respective elastomer means, said elastomer means of each damping connecting device being such that the transmission of forces between the two damped structural elements of each damping connecting device is achieved entirely via said elastomer means.

14. - The support structure as claimed in any one of the preceding claims, **characterized in that** the elastomer means of the damping connecting device have a stiffness greater than 10⁶ Newtons per meter.

15. - A satellite including a support structure as claimed in any one of the preceding claims and at least one device fixed to said support structure.
